# EUROPÄISCHE PATENTSCHRIFT

(11) **EP 2 467 285 B1**
(45) Veröffentlichungstag und Bekanntmachung des Hinweises auf die Patenterteilung: **09.08.2017**
(21) Anmeldenummer: 10728208.9
(22) Anmeldetag: 25.06.2010
(51) Int. Cl.: B60T 8/48, B60T 13/74

(54) **VERFAHREN ZUR BETÄTIGUNG EINER HYDRAULISCHEN FAHRZEUGBREMSANLAGE**
METHOD FOR ACTUATING A HYDRAULIC VEHICLE BRAKE SYSTEM
PROCÉDÉ D'ACTIONNEMENT D'UN SYSTÈME DE FREINAGE HYDRAULIQUE DE VÉHICULE

(30) Priorität: 21.08.2009 DE 102009028770
(43) Veröffentlichungstag der Anmeldung: 27.06.2012
(73) Patentinhaber: Robert Bosch GmbH, 70442 Stuttgart (DE)
(72) Erfinder: VOLLERT, Herbert, 71665 Vaihingen/Enz (DE); GARNIER, Remy, 71686 Remseck (DE); WEIBERLE, Reinhard, 71665 Vaihingen/Enz (DE); JAHNZ, Timo, 74354 Besigheim (DE); MEHL, Volker, 76356 Weingarten (DE); KNEIP, Frank, 74360 Ilsfeld (DE); MAHNKOPF, Dirk, 71634 Eglosheim (DE); KOLARSKY, Jens, 74321 Bietigheim/Bissingen (DE); HOENLE, Stephan, 70825 Korntal-Muenchingen (DE)
(86) Internationale Anmeldenummer: PCT/EP2010/059050
(87) Internationale Veröffentlichungsnummer: WO 2011/020637

(56) Entgegenhaltungen:
- WO-A1-96/02409
- WO-A1-96/14228
- WO-A1-99/07587
- DE-A1- 10 327 553
- DE-C1- 4 028 290
- US-A1- 2002 158 510
- US-A1- 2009 045 672

## Beschreibung

### Stand der Technik

Die Erfindung betrifft ein Verfahren zum Betätigung einer hydraulischen, einen steuerbaren Bremskraftverstärker und eine Radschlupfregeleinrichtung aufweisenden Fahrzeugbremsanlage mit den Merkmalen des Oberbegriffs des Anspruchs 1. Unter "Steuern" im Sinne der Erfindung ist auch ein Regeln zu verstehen.

Die Offenlegungsschrift DE 103 27 553 A1 offenbart eine hydraulische Fahrzeugbremsanlage mit einem hydraulischen Hauptbremszylinder an den hydraulische Radbremsen angeschlossen sind. Der Hauptbremszylinder weist einen elektromechanischen Bremskraftverstärker auf. Dieser umfasst einen Elektromotor, der über ein Rotations- / Translations-Umsetzungsgetriebe den Hauptbremszylinder betätigt.

Der vorbekannte Bremskraftverstärker weist einen Spindeltrieb als Rotations- / Translations-Umsetzungsgetriebe auf. Die Erfindung ist nicht auf diesen Getriebetyp beschränkt. Der Bremskraftverstärker übt eine Verstärkerkraft zusätzlich zu einer Muskelkraft auf einen Kolben des Hauptbremszylinders zur Betätigung des Hauptbremszylinders aus. Der Bremskraftverstärker ist beispielsweise mit einem elektronischen Steuergerät steuerbar.

Die Radbremsen sind unter Zwischenschaltung einer Radschlupfregeleinrichtung an den Hauptbremszylinder angeschlossen. Die Radschlupfregeleinrichtung ermöglicht in an sich bekannter Weise beispielsweise eine (Brems-) Blockierschutzregelung, eine Antriebsschlupfregelung und/oder eine Fahrdynamikregelung. Für diese Regelungen sind die Abkürzungen ABS, ASR, FDR und ESP gebräuchlich. Die Radschlupfregeleinrichtung weist Radbremsdruckmodulationsventilanordnungen sowie eine Hydropumpe je Bremskreis auf, mit denen hydraulische Radbremsdrücke in den Radbremsen radindividuell regelbar/modulierbar sind. Die Hydropumpe einer Radschlupfregeleinrichtung wird vielfach als Rückförderpumpe bezeichnet. Mit ihr ist die Erzeugung eines Radbremsdrucks auch bei nicht betätigtem Hauptbremszylinder möglich.

Die internationale Patentanmeldung WO 96/14 228 beschreibt ein Verfahren zum Betrieb einer hydraulischen Fahrzeugbremsanlage, die eine Radschlupfregeleinrichtung und einen mittels eines Magnetventils steuerbaren Unterdruck-Bremskraftverstärker aufweist. Zu einer Schlupfregelung wird der Bremskraftverstärker unabhängig von einem Fahrerwillen voll ausgesteuert und die Radbremsdrücke werden mit Einlassventilen und Auslassventilen der Radschlupfregeleinrichtung, die jeder Radbremse zugeordnet sind, geregelt. Eine Hydropumpe der Radschlupfregeleinrichtung wird während einer Schlupfregelung angetrieben, sie erhöht jedoch nicht einen von einem Hauptbremszylinder erzeugten Bremsdruck, weil ihre Druckseite durch ein offen bleibendes Trennventil mit dem Hauptbremszylinder kommuniziert. Ihre Saugseite ist mit einem Niederdruck-Hydrospeicher verbunden, der durch die Auslassventile an die Radbremsen angeschlossen ist. Vom Hauptbremszylinder ist die Saugseite der Hydropumpe durch ein geschlossenes Ansaugventil getrennt. Reicht ein vom Bremskraftverstärker gelieferter Bremsdruck nicht für die Schlupfregelung aus, wird das Trennventil geschlossen und das Ansaugventil geöffnet, so dass die Hydropumpe den vom Hauptbremszylinder erzeugten Bremsdruck erhöht.
Die internationale Patentanmeldung WO 96/02 409 beschreibt ein Verfahren, bei dem unabhängig von einem Fahrerwillen während einer Anlaufphase einer Hydropumpe einer Radschlupfregeleinrichtung ein Unterdruck-Bremskraftverstärker angesteuert wird, so dass Radbremsen vorgefüllt werden. Für einen weiteren Druckaufbau wird ein Trennventil geschlossen und dadurch der Hauptbremszylinder hydraulisch von der Fahrzeugbremsanlage getrennt, und ein Ansaugventil geöffnet, das eine Saugseite der Hydropumpe mit dem Hauptbremszylinder verbindet. Ein von der Rückförderpumpe erzeugter Druck wird mit Einlassventilen und Auslassventilen geregelt, die jeder Radbremse zugeordnet sind.

### Offenbarung der Erfindung

Die Erfindung sieht eine Betätigung der hydraulischen Fahrzeugbremsanlage mit dem Bremskraftverstärker, der den Hauptbremszylinder betätigt, und gleichzeitig mit der Radschlupfregeleinrichtung, insbesondere mit deren Hydropumpe, vor. Ein Ansaugventil, das zwischen dem Hauptbremszylinder und einer Saugseite der Hydropumpe angeordnet ist, wird geöffnet und dadurch die Saugseite der Hydropumpe mit dem Hauptbremszylinder verbunden. Die Hydropumpe erhält dadurch auf ihrer Saugseite unter Druck stehende Bremsflüssigkeit zugeleitet und muss keine drucklose Bremsflüssigkeit ansaugen. Durch das Zusammenwirken des den Hauptbremszylinder betätigenden Bremskraftverstärkers und die Radschlupfregeleinrichtung, beispielsweise deren Hydropumpe, ist ein sehr schneller, hochdynamischer Druckaufbau in den Radbremsen möglich. Die Betätigung des Hauptbremszylinders mit dem Bremskraftverstärker erzeugt einen hydraulischen Druck in der Fahrzeugbremsanlage, der als Radbremsdruck den Radbremsen zur Verfügung steht. Zusätzlich steht der hydraulische Druck, den der Bremskraftverstärker durch Betätigung des Hauptbremszylinders erzeugt, auf der Saugseite der Hydropumpe zur Verfügung, diese muss keine drucklose Bremsflüssigkeit ansaugen, sondern der Hauptbremszylinder fördert ihr Bremsflüssigkeit unter Druck zu. Der Bremsdruckaufbau mit der Hydropumpe ist dadurch erheblich beschleunigt. Die Betätigung des Hauptbremszylinders mit dem Bremskraftverstärker hat also außer der unmittelbaren Betätigung der Radbremsen den zusätzlichen Vorteil, dass er den Druckaufbau mit der Hydropumpe beschleunigt.

Das erfindungsgemäße Verfahren ist für Sicherheits- und Assistenzfunktionen einer hydraulischen Fahrzeugbremsanlage vorgesehen, bei denen eine hohe Druckaufbaudynamik, d.h. ein schneller Radbremsdruckaufbau gefordert oder jedenfalls vorteilhaft ist. Allerdings ist die Erfindung nicht auf solche Funktionen beschränkt.

Die Unteransprüche haben vorteilhafte Ausgestaltungen und Weiterbildungen der im Anspruch 1 angegebenen Erfindung zu Gegenstand.

Als steuerbaren Bremskraftverstärker sieht Anspruch 2 einen elektromechanischen Bremskraftverstärker vor. Einen solchen offenbart die oben genannte Offenlegungsschrift DE 103 27 553 A1. Elektromechanische Bremskraftverstärker sind auch mit einem Elektro-Linearmotor oder einem Elektromagneten bekannt. Diesbezüglich wird beispielhaft hingewiesen auf die Offenlegungsschrift DE 100 57 557 A1. Elektromechanische Bremskraftverstärker sind konstruktionsbedingt elektrisch bzw. elektronisch steuerbar und deswegen zur Verwendung im erfindungsgemäßen Verfahren geeignet. Grundsätzlich ist jeder steuerbare Bremskraftverstärker zur Durchführung des erfindungsgemäßen Verfahrens verwendbar. Ein Unterdruck-Bremskraftverstärker weist zu seiner Steuerbarkeit beispielsweise ein steuerbares (Magnet-) Ventil zur Belüftung einer Arbeitskammer auf zusätzlich zu einem vorhandenen Servoventil, das die Arbeitskammer in Abhängigkeit vom Weg einer Kolbenstange und/oder einer auf sie ausgeübten Muskelkraft belüftet. Auch andere pneumatische Bremskraftverstärker oder elektrohydraulische Bremskraftverstärker mit beispielsweise einem Elektro- oder Hydromotor und einer vom Motor angetriebenen Hydropumpe ggf. einem nachgeschalteten Hydrospeicher und einer Steuerventilanordnung oder auch piezoelektrisch betätigte Bremskraftverstärker sind für die Erfindung verwendbar. Die Aufzählung ist nicht abschließend.

Anspruch 3 sieht die erfindungsgemäße Betätigung der hydraulischen Fahrzeugbremsanlage gleichzeitig durch Betätigung des Hauptbremszylinders mit dem Bremskraftverstärker und durch Druckerzeugung mit (der Hydropumpe) der Radschlupfregeleinrichtung vor, wenn ein Radbremsdruck erzeugt werden soll, der größer als ein vorgegebener bzw. vorgebbarer Schwellenwert ist. Anspruch 4 sieht das gleiche für einen vorgegebenen bzw. vorgebbaren Schwellenwert einer Geschwindigkeit für den Aufbau des Radbremsdrucks vor. Beide Möglichkeiten können einzelnen oder kombiniert ausgeführt werden. Beide Möglichkeiten haben die Erweichung eines Radbremsdrucks in kurzer Zeit bzw. einen schnellen Druckaufbau zum Gegenstand.

Ein weiterer Anwendungsfall der Erfindung ist die Erhöhung des Radbremsdrucks in der mindestens einen Radbremse auf einen Druck, der höher ist als der Druck, der durch Betätigung des Hauptbremszylinders mit dem Bremskraftverstärker erreichbar ist. Dazu sieht Anspruch 5 eine Betätigung des Hauptbremszylinders mit dem Bremskraftverstärker und eine Erhöhung des dadurch erzeugten Drucks mit der Radschlupfregeleinrichtung, insbesondere mit deren Hydropumpe, vor. Es kann die Druckerzeugung mit der Radschlupfregeleinrichtung gleichzeitig mit der Betätigung des Hauptbremszylinders durch den Bremskraftverstärker erfolgen. Ebenso ist es möglich, dass ein zunächst durch Betätigung des Hauptbremszylinders mit dem Bremskraftverstärker erzeugter Druck mit der Radschlupfregeleinrichtung, insbesondere durch Einschalten ihrer Hydropumpe, erhöht wird, oder dass umgekehrt das zunächst mit der Radschlupfregeleinrichtung erzeugte Druckniveau durch Betätigung des Hauptbremszylinders mit dem Bremskraftverstärker angehoben wird. Es kann in allen Fahrzeugrädern derselbe Radbremsdruck herrschen, ebenfalls ist eine radindividuelle Bremsdruckregelung in bekannter und üblicher Weise mit der Radschlupfregeleinrichtung möglich. Außer dem Vorteil, dass ein höherer Druck als durch Betätigung des Hauptbremszylinders mit dem Bremskraftverstärker erreichbar ist, hat diese Ausgestaltung der Erfindung den Vorteil, dass eine Bremsbetätigung ausschließlich durch Betätigung des Hauptbremszylinders mit dem Bremskraftverstärker erfolgen kann, sofern der dadurch erzeugbare bzw. erzeugte Druck ausreicht. Die Bremsbetätigung der Fahrzeugbremsanlage mit dem Bremskraftverstärker ist, im Unterschied zu einer Bremsbetätigung mit der Hydropumpe einer Radschlupfregeleinrichtung, für einen Fahrzeugführer fast nicht wahrnehmbar. Reicht der mit dem Bremskraftverstärker erzeugte Druck nicht aus, erfolgt die erfindungsgemäße Druckerhöhung mit der Radschlupfregeleinrichtung. Die Druckerhöhung erfolgt wegen des auf der Saugseite der Hydropumpe erhöhten hydraulischen Drucks sehr schnell.

Insbesondere wenn der Hauptbremszylinder nicht mit Muskelkraft betätigt wird, lässt sich mit dem erfindungsgemäßen Verfahren schnell ein hoher Radbremsdruck erzeugen. Das ist Gegenstand des Anspruchs 1. Ein schneller Druckaufbau ist notwendig oder jedenfalls vorteilhaft bei einer Fahrdynamikregelung, also der gezielten Bremsung eines oder mehrerer Fahrzeugräder um einer Schleuderneigung eines Fahrzeugs entgegenzuwirken. Die Schleuderneigung kann auftreten ohne dass ein Fahrzeugführer die Bremse betätigt, also ohne Muskelkraftbetätigung.

Auch zur Vermeidung eines Unfalls oder bei einem Unfall kann das erfindungsgemäße Verfahren vorteilhaft eingesetzt werden (Anspruch 6). Ein Unfall wird detektiert mit einem sog. "Crash-Sensor", der zum Auslösen von Airbags vielfach ohnehin vorhanden ist. Mit einem oder mehreren Radarsensoren lässt sich ein bevorstehender Aufprall auf ein Hindernis detektieren und die Fahrzeugbremsanlage erfindungsgemäß betätigen. Ein solches Hindernis kann auch ein vorausfahrendes oder bereits zum Stehen gekommenes Fahrzeug sein. Eine weitere Anwendungsmöglichkeit des erfindungsgemäßen Verfahrens ist die Vermeidung eines Fahrzeugüberschlags, auf englisch auch "roll-over mitigation" (ROM) genannt. Solche Verfahren kommen hauptsächlich bei hohen Fahrzeugen wie Vans, SUVs (Sport Utility Vehicles) oder Geländefahrzeugen zum Einsatz. Beginnt ein Fahrzeug mit hoher Geschwindigkeit zu kippen, wird ein oder werden mehrere Fahrzeugräder durch starkes Abbremsen zum Blockieren gebracht. Die Seitenführungskraft der blockierenden Räder und infolge dessen die Kippneigung des Fahrzeugs verringert sich. Allen genannten Anwendungsfällen ist gemeinsam, dass sie umso effektiver sind, je früher sie beginnen und je schneller sie wirksam werden, ein schneller Radbremsdruckaufbau ist notwendig oder jedenfalls vorteilhaft. Der Aufbau eines hohen Radbremsdrucks ist für diese Anwendungen unerlässlich um ein oder mehrere Fahrzeugräder bis zum Blockieren zu bremsen.

Auch ist es möglich, mit dem Bremskraftverstärker einen hydraulischen Druck auf einer Hauptbremszylinderseite des oder der Trennventile zu erzeugen oder aufrecht zu erhalten. Das Trennventil wird bei mit dem Bremskraftverstärker betätigtem Hauptbremszylinder geschlossen oder das Trennventil wird bei nicht betätigtem Hauptbremszylinder geschlossen und der Hauptbremszylinder anschließend mit dem Bremskraftverstärker betätigt und dadurch der Druck auf der Hauptbremszylinderseite des Trennventils erzeugt. Das ist Gegenstand des Anspruchs 1. Der durch Betätigung des Hauptbremszylinders mit dem Bremskraftverstärker erzeugte Druck auf der Hauptbremszylinderseite des Trennventils kann gleich groß, größer oder kleiner als ein Druck auf der Radbremsenseite des Trennventils sein. Mit der Radschlupfregeleinrichtung kann der Radbremsdruck in allen Radbremsen oder radindividuell gegenüber dem Hauptbremszylinderdruck abgesenkt oder auch erhöht werden. Diese Ausgestaltung der Erfindung verringert eine Leckage durch die Trennventile, also einen Bremsflüssigkeitsstrom in Richtung des Hauptbremszylinders oder in Richtung der Radbremsen durch das geschlossene Trennventil bei einer Druckdifferenz zwischen den Anschlüssen des Trennventils. Es können billigere Trennventile verwendet werden und die Schaltleistung ist geringer. Auch können die Trennventile bei geringerem Differenzdruck zwischen ihren Anschlüssen geschaltet werden. Ein Druckverlust durch die geschlossenen Trennventile hindurch ist höchstens bis zum Hauptbremszylinderdruck möglich, der durch Betätigung des Hauptbremszylinders mit dem Bremskraftverstärker erzeugt und gehalten wird.

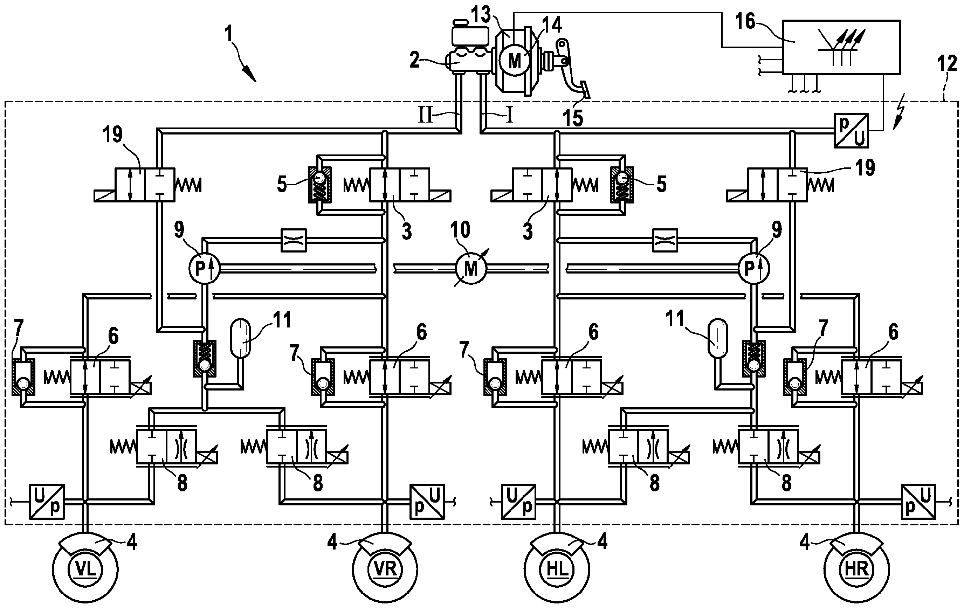

### Kurze Beschreibung der Zeichnung

Die Erfindung wird nachfolgend anhand der Zeichnung näher erläutert. Die einzige Figur zeigt einen Schaltplan einer hydraulischen Fahrzeugbremsanlage zur Erläuterung des erfindungsgemäßen Verfahrens.

### Ausführungsform der Erfindung

Die in der Zeichnung dargestellte erfindungsgemäße hydraulische Fahrzeugbremsanlage 1 ist als Zweikreisbremsanlage mit zwei Bremskreisen I, II ausgebildet, die an einen Hauptbremszylinder 2 angeschlossen sind. Jeder Bremskreis I, II ist über ein Trennventil 3 an den Hauptbremszylinder 2 angeschlossen. Die Trennventile 3 sind in ihrer stromlosen Grundstellung offene 2/2-Wege-Magnetventile. Den Trennventilen 3 ist jeweils ein vom Hauptbremszylinder 2 zu Radbremsen 4 durchströmbares Rückschlagventil 5 hydraulisch parallel geschaltet. An das Trennventil 3 jedes Bremskreis I, II sind Radbremsen 4 über Bremsdruckaufbauventile 6 angeschlossen. Die Bremsdruckaufbauventile 6 sind in ihrer stromlosen Grundstellung offene 2/2-Wege-Magnetventile. Ihnen sind Rückschlagventile 7 parallel geschaltet, die von den Radbremsen 4 in Richtung zum Hauptbremszylinder 2 durchströmbar sind.

An jede Radbremse 4 ist ein Bremsdruckabsenkventil 8 angeschlossen, die gemeinsam an eine Saugseite einer Hydropumpe 9 angeschlossen sind, die auch als Rückförderpumpe bezeichnet wird. Die Bremsdruckabsenkventile 8 sind als in ihrer stromlosen Grundstellung geschlossene 2/2-Wege-Magnetventile ausgebildet. Eine Druckseite der Hydropumpe 9 ist zwischen den Bremsdruckaufbauventilen 6 und den Trennventilen 3 angeschlossen, d. h. die Druckseite der Hydropumpe 9 ist über die Bremsdruckaufbauventile 6 mit den Radbremsen 4 und über das Trennventil 3 mit dem Hauptbremszylinder 2 verbunden.

Die Bremsdruckaufbauventile 6 und die Bremsdruckabsenkventile 8 sind wegen der besseren Steuer- und Regelbarkeit Proportionalventile.

Jeder der beiden Bremskreise I, II weist eine Hydropumpe 9 auf, die gemeinsam mit einem Elektromotor 10 antreibbar sind. Die Saugseiten der Hydropumpen 9 sind an die Bremsdruckabsenkventile 9 angeschlossen. Auf der Saugseite der Hydropumpen 9 sind Hydrospeicher 11 zur Aufnahme und Zwischenspeicherung von Bremsflüssigkeit vorhanden, die durch Öffnen der Bremsdruckabsenkventile 8 während einer Schlupfregelung aus den Radbremsen 4 ausströmt.

Die Bremsdruckaufbauventile 6 und die Bremsdruckabsenkventile 8 bilden Radbremsdruckmodulationsventilanordnungen, mit denen bei angetriebener Hydropumpe 9 eine radindividuelle Bremsdruckregelung zur Schlupfregelung in an sich bekannter und hier nicht zu erläuternder Weise möglich ist. Die Trennventile 3 können bei einer Schlupfregelung geschlossen werden, d.h. die Fahrzeugbremsanlage 1 wird hydraulisch vom Hauptbremszylinder 2 getrennt.

Zu einem schnellen Druckaufbau bei nicht betätigtem Hauptbremszylinder 2 weist die Fahrzeugbremsanlage 1 in jedem Bremskreis I, II ein Ansaugventil 19 auf, durch das die Saugseite der Hydropumpe 9 mit dem Hauptbremszylinder 2 verbindbar ist. Die Ansaugventile 19 sind als in ihrer stromlosen Grundstellung geschlossene 2/2-Wege-Magnetventile ausgebildet.

Die Bremsdruckaufbauventile 6, die Bremsdruckabsenkventile 8, die Trennventile 3, die Ansaugventile 19 und die Hydropumpen 9, die mit dem Elektromotor 10 antreibbar sind, sind Bestandteil einer Radschlupfregeleinrichtung 12 (Blockierschutzregelung ABS, Antriebsschlupfregelung ASR, Fahrdynamikregelung FDR, ESP) der Fahrzeugbremsanlage 1. Mit der Radschlupfregeleinrichtung 12, d.h. mit ihren Hydropumpen 9, lässt sich ein Radbremsdruck in den Radbremsen 4 auch bei nicht betätigtem Hauptbremszylinder 2 erzeugen und mit den Bremsdruckaufbauventilen 6 und den Bremsdruckabsenkventilen 8 radindividuell regeln.

Der Hauptbremszylinder 2 weist einen Bremskraftverstärker 13 auf, im Ausführungsbeispiel einen elektromechanischen Bremskraftverstärker 13, der mit Hilfe eines Elektromotors 14 eine Verstärkerkraft erzeugt, die zusammen mit einer Muskelkraft, die über ein Bremspedal 15 aufgebracht wird, den Hauptbremszylinder 2 betätigt. Der symbolisch dargestellte Elektromotor 14 ist in den Bremskraftverstärker 13 integriert. Der Elektromotor 14 kann ein rotatorischer Motor sein, dessen Drehbewegung über ein Getriebe untersetzt und in eine translatorische Bewegung zur Betätigung des Hauptbremszylinders 2 gewandelt wird. Es ist auch eine Ausführung des Bremskraftverstärkers 13 mit einem Elektro-Linearmotor oder einem Elektromagneten möglich. Die Aufzählung ist nicht abschließend. Auch ist ein elektromechanischer Bremskraftverstärker 13 nicht zwingend für die Erfindung, auch andere, mit einem elektronischen Steuergerät 16 steuerbare Bremskraftverstärker sind möglich. Zur Steuerung oder Regelung der Fahrzeugbremsanlage 1 einschließlich des Bremskraftverstärkers 13 ist das elektronische Steuergerät 16 vorhanden.

Zur Betätigung der Fahrzeugbremsanlage 1 wird erfindungsgemäß der Hauptbremszylinder 2 mit dem Bremskraftverstärker 13 betätigt und die Hydropumpen 9 mit dem Elektromotor 10 angetrieben. Sowohl die Betätigung des Hauptbremszylinders 2 als auch der Antrieb der Hydropumpen 9 erzeugen einen hydraulischen Druck in der Fahrzeugbremsanlage 1, mit dem als Radbremsdruck die Radbremsen 4 betätigt werden. Die Ansaugventile 19 werden geöffnet. Die Druckerzeugung sowohl mit dem Hauptbremszylinder 2 als auch mit den Hydropumpen 9 bewirkt einen schnellen Druckaufbau. Der Druckaufbau mit den Hydropumpen 9 wird durch die Betätigung des Hauptbremszylinders 2 zusätzlich beschleunigt, weil die Hydropumpen 9 nicht drucklose Bremsflüssigkeit ansaugen müssen, sondern unter Druck stehende Bremsflüssigkeit geliefert bekommen. Besonders vorteilhaft ist die Anwendung des erfindungsgemäßen Verfahrens in Situationen, in denen der Hauptbremszylinder 2 nicht durch Muskelkraft mit dem Bremspedal 15 betätigt wird, weil in diesem Fall ein Druckaufbau nur mit den Hydropumpen 9 ohne Betätigung des Hauptbremszylinders 2 erheblich langsamer wäre.

Die Betätigung des Hauptbremszylinders 2 mit dem Bremskraftverstärker 13 gleichzeitig zur Druckerzeugung mit den Hydropumpen 9 erfolgt beispielsweise wenn ein hoher Radbremsdruck in den Radbremsen 4 und/oder ein schneller Druckaufbau gefordert wird. Beides kann durch Schwellenwerte für den aufzubauenden Radbremsdruck bzw. für die Druckaufbaugeschwindigkeit vorgegeben werden. Weitere Anwendungsfälle für das erfindungsgemäße Verfahren, also die gleichzeitige Betätigung des Hauptbremszylinders 2 mit dem Bremskraftverstärker 13 und der Druckaufbau mit den Hydropumpen 9 sind ein Unfall, die Vermeidung eines Unfalls oder zumindest die Reduzierung einer Aufprallgeschwindigkeit bei einem Unfall und die Vermeidung eines Fahrzeugüberschlags. Detektiert wird ein Unfall mit einem sog. Crash-Sensor, wie er zur Auslösung von Airbags bekannt und vielfach in Fahrzeugen vorhanden ist. Ein sich anbahnender Unfall wird beispielsweise mit Radarsensoren detektiert. Die Gefahr eines Fahrzeugüberschlags ist detektierbar durch eine hohe Kippgeschwindigkeit des Fahrzeugs. Hier lassen sich gezielt Fahrzeugräder bis zum Blockieren bremsen, um ihre Seitenführungskraft zu verringern, was der Kippneigung entgegenwirkt.

Zur Erhöhung des Radbremsdrucks in den Radbremsen 4 über den Druck, der durch Betätigung des Hauptbremszylinders 2 mit dem Bremskraftverstärker 13 erzeugbar ist, werden der Hauptbremszylinder 2 mit dem Bremskraftverstärker 13 betätigt, die Trennventile 3 geschlossen und die Hydropumpen 9 mit dem Elektromotor 10 angetrieben. Die Ansaugventile 19 werden geöffnet, so dass die Hydropumpen 9 unter Druck stehende Bremsflüssigkeit aus dem Hauptbremszylinder 2, der vom Bremskraftverstärker 13 betätigt wird, erhalten. Bei geschlossenen Ansauventilen 19 muss Bremsflüssigkeit in den Hydrospeichern 11 auf den Saugseiten der Hydropumpen 9 enthalten sein, oder es muss in jedem Bremskreis I, II mindestens eins Bremsdruckabsenkventil 8 geöffnet werden, damit die Hydropumpe 9 Bremsflüssigkeit ansaugen und fördern kann. Die Hydropumpen 9 können gleichzeitig mit Betätigung des Hauptbremszylinders 2 mit dem Bremskraftverstärker 13 eingeschaltet werden oder es kann zuerst der Hauptbremszylinders 2 mit dem Bremskraftverstärker 13 betätigt und dann die Hydropumpen 9 eingeschaltet oder umgekehrt zuerst die Hydropumpen 9 eingeschaltet und dann der Hauptbremszylinder 2 mit dem Bremskraftverstärker 13 betätigt werden. Es ist beispielsweise eine Komfortbremsung durch Betätigung des Hauptbremszylinders 2 mit dem Bremskraftverstärker 13 möglich. Wird bei betätigtem Hauptbremszylinder 2 ein höherer Bremsdruck benötigt als mit dem Bremskraftverstärker 13 erzeugbar ist, werden die Hydropumpen 9 eingeschaltet und die Trennventile 3 geschlossen. Da die Bremsbetätigung durch Betätigung des Hauptbremszylinders 2 mit dem Bremskraftverstärker 13, im Unterschied zu einer Bremsbetätigung mit den Hydropumpen 9 der Radschlupfregeleinrichtung 12, für einen Fahrzeugführer fast nicht wahrnehmbar ist, kann die Bremsbetätigung durch Betätigung des Hauptbremszylinders 2 mit dem Bremskraftverstärker 13 bei ausgeschalteten Hydropumpen 9 als Komfortbremsung bezeichnet werden.

Um einen bestimmten Radbremsdruck aufrecht zu erhalten, werden die Trennventile 3 bei mit dem Bremskraftverstärker 13 betätigtem Hauptbremszylinder 2 geschlossen. Der Hauptbremszylinder 2 kann auch erst nach dem Schließen der Trennventile 3 betätigt werden, wenn beispielsweise mit den Hydropumpen 9 ein Radbremsdruck aufgebaut worden ist oder wird. Der mit dem betätigten Hauptbremszylinder 2 erzeugte Druck verringert eine Leckage durch die geschlossenen Trennventile 3 hindurch, wenn diese nicht absolut dicht sind. Auf diese Weise ist ein Druckhalten ohne die Hydropumpen 9 möglich. Ein Druckabsenken unter den Hauptbremszylinderdruck ist durch Öffnen der Bremsdruckabsenkventile 8, also in an sich bekannter Weise mit der Radschlupfregeleinrichtung 12 möglich. Eine Druckerhöhung ist mit den Hydropumpen 9 möglich. Es ist eine radindividuelle Bremsdruckregelung mit der Radschlupfregeleinrichtung 12 möglich.

## Patentansprüche

1. Verfahren zur Betätigung einer hydraulischen Fahrzeugbremsanlage (1), mit einem hydraulischen Hauptbremszylinder (2), an den mindestens eine hydraulische Radbremse (4) angeschlossen ist, mit einem steuerbaren Bremskraftverstärker (13), mit einer Radschlupfregeleinrichtung (12), die eine Hydropumpe (9) aufweist, mit der ein Radbremsdruck in der mindestens einen Radbremse (4) erzeugbar ist, mit einem Ansaugventil (19), das zwischen dem Hauptbremszylinder (2) und einer Saugseite der Hydropumpe (9) angeordnet ist, und mit einem Trennventil (3), über das die mindestens eine Radbremse (4) an den Hauptbremszylinder (2) angeschlossen und das zwischen dem Hauptbremszylinder (2) und einer Druckseite der Hydropumpe (9) angeordnet ist, wobei ausgehend von einem nicht betätigten Hauptbremszylinder (2) zu einem schnellen Druckaufbau zu einer Bremsbetätigung der Bremskraftverstärker (13) den Hauptbremszylinder (2) betätigt, das Ansaugventil (19) geöffnet, die Hydropumpe (9) betrieben und mit der Radschlupfregeleinrichtung (12) ein Radbremsdruck in der mindestens einen Radbremse (4) erzeugt wird, und nachdem ein Druck durch Betätigung des Hauptbremszylinders (2) mit dem Bremskraftverstärker (13) erzeugt worden ist und wenn ein Radbremsdruck über einen Druck erhöht werden soll, der durch Betätigung des Hauptbremszylinders (2) mit dem Bremskraftverstärker (13) erzeugbar ist, das Trennventil (3) geschlossen wird und mit der Radschlupfregeleinrichtung (12) ein Radbremsdruck über einen Druck erhöht wird, der durch Betätigung des Hauptbremszylinders (2) mit dem Bremskraftverstärker (13) erzeugbar ist.

2. Verfahren nach Anspruch 1, **dadurch gekennzeichnet, dass** die Fahrzeugbremsanlage (1) einen elektromechanischen Bremskraftverstärker (13) aufweist.

3. Verfahren nach Anspruch 1, **dadurch gekennzeichnet, dass** der Bremskraftverstärker (13) den Hauptbremszylinder (2) betätigt und der Radbremsdruck mit der Radschlupfregeleinrichtung (12) aufgebaut wird, wenn ein Radbremsdruck erzeugt werden soll, der größer als ein Schwellenwert ist.

4. Verfahren nach Anspruch 1, **dadurch gekennzeichnet, dass** der Bremskraftverstärker (13) den Hauptbremszylinder (2) betätigt und der Radbremsdruck mit der Radschlupfregeleinrichtung (12) aufgebaut wird, wenn ein Radbremsdruck mit einer Geschwindigkeit erzeugt werden soll, die größer als ein Schwellenwert ist.

5. Verfahren nach Anspruch 1, **dadurch gekennzeichnet, dass** der Bremskraftverstärker (13) den Hauptbremszylinder (2) betätigt und der Radbremsdruck mit der Radschlupfregeleinrichtung (12) aufgebaut wird, wenn der Hauptbremszylinder (2) nicht mit Muskelkraft betätigt wird.

6. Verfahren nach Anspruch 1, **dadurch gekennzeichnet, dass** bei einem Unfall der Bremskraftverstärker (13) den Hauptbremszylinder (2) betätigt und ein Radbremsdruck mit der Radschlupfregeleinrichtung (12) aufgebaut wird.

## Claims

1. Method for actuating a hydraulic vehicle brake system (1) having a hydraulic master brake cylinder (2), to which at least one hydraulic wheel brake (4) is connected, having a controllable brake booster (13), having a wheel slip control device (12) which has a hydraulic pump (9) with which a wheel brake pressure can be generated in the at least one wheel brake (4), having an intake valve (19) which is arranged between the master brake cylinder (2) and a suction side of the hydraulic pump (9), and having an isolating valve (3) by means of which the at least one wheel brake (4) is connected to the master brake cylinder (2), and which is arranged between the master brake cylinder (2) and a pressure side of the hydraulic pump (9), wherein, starting from a master brake cylinder (2) which is not actuated, for a rapid build-up of pressure, in order to actuate the brakes, the brake booster (13) actuates the master brake cylinder (2), the intake valve (19) is opened, the hydraulic pump (9) is operated and a wheel brake pressure is generated in the at least one wheel brake (4) with the wheel slip control device (12), and after a pressure has been generated by actuating the master brake cylinder (2) with the brake booster (13) and, if a wheel brake pressure is to be increased above a pressure which can be generated by actuating the master brake cylinder (2) with the brake booster (13), the isolating valve (3) is closed and a wheel brake pressure is increased with the wheel slip control device (12) above a pressure which can be generated by actuating the master brake cylinder (2) with the brake booster (13).

2. Method according to Claim 1, **characterized in that** the vehicle brake system (1) has an electromechanical brake booster (13).

3. Method according to Claim 1, **characterized in that** the brake booster (13) actuates the master brake cylinder (2), and the wheel brake pressure is built up with the wheel slip control device (12) if a wheel brake pressure is to be generated which is greater than a threshold value.

4. Method according to Claim 1, **characterized in that** the brake booster (13) actuates the master brake cylinder (2), and the wheel brake pressure is built up with the wheel slip control device (12) if a wheel brake pressure is to be generated with a speed which is higher than a threshold value.

5. Method according to Claim 1, **characterized in that** the brake booster (13) actuates the master brake cylinder (2), and the wheel brake pressure is built up with the wheel slip control device (12) if the master brake cylinder (2) is not actuated with muscle force.

6. Method according to Claim 1, **characterized in that** in the event of an accident the brake booster (13) actuates the master brake cylinder (2) and a wheel brake pressure is built up with the wheel slip control device (12).

## Revendications

1. Procédé d'actionnement d'un système de freinage hydraulique de véhicule (1), avec un maître-cylindre hydraulique (2), auquel est raccordé au moins un frein de roue hydraulique (4), avec un servofrein réglable (13), avec un dispositif de réglage du patinage de roue (12), qui présente une pompe hydraulique (9), avec laquelle il est possible de produire une pression de frein de roue dans ledit au moins un frein de roue (4), avec une vanne d'aspiration (19), qui est disposée entre le maître-cylindre (2) et un côté d'aspiration de la pompe hydraulique (9), et avec une vanne de coupure (3), par laquelle ledit au moins un frein de roue (4) est raccordé au maître-cylindre (2) et qui est disposée entre le maître-cylindre (2) et un côté de pression de la pompe hydraulique (9), dans lequel, en partant d'un maître-cylindre (2) non actionné pour une rapide montée de pression en vue d'un actionnement du frein, le servofrein (13) actionne le maître-cylindre (2), la vanne d'aspiration (19) est ouverte, la pompe hydraulique (9) est activée et une pression de frein de roue est produite dans ledit au moins un frein de roue (4) avec le dispositif de réglage du patinage de roue (12), et une fois qu'une pression a été produite par actionnement du maître-cylindre (2) avec le servofrein (13) et lorsqu'une pression de frein de roue doit être augmentée au-delà d'une pression qui peut être produite par actionnement du maître-cylindre (2) avec le servofrein (13), on ferme la vanne de coupure (3) et on augmente avec le dispositif de réglage du patinage de roue (12) une pression de frein de roue au-delà d'une pression, qui peut être produite par actionnement du maître-cylindre (2) avec le servofrein (13).

2. Procédé selon la revendication 1, **caractérisé en ce que** le système de freinage de véhicule (1) présente un servofrein électromécanique (13).

3. Procédé selon la revendication 1, **caractérisé en ce que** le servofrein (13) actionne le maître-cylindre (2) et la pression de frein de roue est produite avec le dispositif de réglage du patinage de roue (12), lorsqu'il faut produire une pression de frein de roue, qui est plus élevée qu'une valeur de seuil.

4. Procédé selon la revendication 1, **caractérisé en ce que** le servofrein (13) actionne le maître-cylindre (2) et la pression de frein de roue est produite avec le dispositif de réglage du patinage de roue (12), lorsqu'une pression de frein de roue doit être produite avec une vitesse, qui est plus élevée qu'une valeur de seuil.

5. Procédé selon la revendication 1, **caractérisé en ce que** le servofrein (13) actionne le maître-cylindre (2) et la pression de frein de roue est produite avec le dispositif de réglage du patinage de roue (12), lorsque le maître-cylindre (2) n'est pas actionné avec une force musculaire.

6. Procédé selon la revendication 1, **caractérisé en ce qu'**en cas d'accident, le servofrein (13) actionne le maître-cylindre (2) et une pression de frein de roue est produite avec le dispositif de réglage du patinage de roue (12).
